# EUROPEAN PATENT SPECIFICATION

(11) **EP 3 252 394 B1**
(45) Date of publication and mention of the grant of the patent: **19.08.2020**
(21) Application number: 17174117.6
(22) Date of filing: 01.06.2017
(51) Int. Cl.: F24H 9/14, F24D 3/10, F24D 10/00, F24D 19/00

(54) **HYDRAULIC ASSEMBLY FOR A HOT WATER PRODUCING SYSTEM**
HYDRAULIKBAUGRUPPE FÜR EIN WARMWASSERERZEUGUNGSSYSTEM
UNITÉ HYDRAULIQUE POUR UN SYSTÈME DE PRODUCTION D'EAU CHAUDE

(30) Priority: 01.06.2016 IT UA20164036
(43) Date of publication of application: 06.12.2017
(73) Proprietor: O.T.M.A. S.N.C. di Spaggiari & C., 42041 Brescello (IT)
(72) Inventor: SPAGGIARI, Remo, 43058 SORBOLO (IT); BACCHINI, Mirko, 43058 SORBOLO (IT)
(74) Representative: Bergadano, Mirko

(56) References cited:
- EP-A1- 1 408 292
- EP-A1- 3 012 553
- EP-A2- 0 797 057
- EP-A2- 1 965 139
- WO-A1-89/09368
- DE-U1-202009 006 040

## Description

The invention relates to a hydraulic assembly for a hot water producing system.

Over the last few years, district heating has been spreading in Europe as an alternative, for room heating, to the independent heating traditionally using the classical wall-mounted boilers commonly used in apartments.

As a matter of fact, the larger and larger presence of underground and properly insulated hydraulic networks, which start from waste-to-energy plants or from biomass-supplied neighbourhood thermal power stations, provides for a transfer fluid, at a middle-high temperature (around 90°C), which is suited to heat civil buildings as well as industrial/commercial complexes.

Connections to the hydraulic network of the district heating involve the interposition of a water/water heat exchanger, properly sized, which is usually installed in the boiler room of the building with the function of exchanging the thermal energy needed for the utilities.

The thermal energy received by the heat exchanger installed in the boiler room is transmitted to interface thermal modules, which are located inside every single apartment, and then - from said modules - its is distributed to the rooms to be heated, just like with a normal boiler for independent heating.

These thermal modules are provided with thermal-hydraulic apparatuses that are substantially similar to the ones of a domestic wall-mounted gas boiler, though without containing the part concerning the gas burner.

Such thermal modules have been described in EP-A1-3 012 553, EP-A1-1 408 292, DE-U1-20 2009 006040.

Said thermal modules can be configured for the sole heating of the rooms or combined for the instantaneous production of domestic hot water.

The thermal energy actually used by a utility (regardless of whether it is a civil or an industrial utility) is counted by a heat counter installed on board each thermal module for the assignment of the costs to be individually associated with every utility based on the actual consumption; with the same advantages of the so-called independent heating, but with the certainty that in the rooms of civil buildings there are no gas combustion assemblies and relative flues for the evacuation of exhaust gases.

The designing of these thermal modules has recently started being oriented towards more advanced solutions, capable of ensuring greater safety and of allowing users to individually select their own operating parameters, without obligations towards the other owners.

These new thermal modules are provided with two heat exchangers; one for the hydraulic separation of the primary station circuit from the secondary apartment circuit, and one for the hydraulic separation of the primary circuit from the sanitary apartment circuit.

Therefore, the secondary/sanitary circuits are totally independent from the primary circuit both in terms of operating pressure/temperature level and in terms of thermal-technical calculation, which - as a result - is much simpler.

However, the addition of a further heat exchanger for the separation of the water of the primary circuit leads to a significant hydraulic complication, which usually turns into an increase of the space taken up by the hydraulic assemblies and by the pipe connections used for the connection of the apparatus.

Therefore, the assembly and the maintenance of the hydraulic assemblies are more complicated and difficult due to the small spaces available. This finally translates into greater manufacturing costs for the hydraulic assemblies.

Therefore, the invention is based on the idea of providing the manufacturers of thermal modules for room heating and for the production of domestic hot water with a novel hydraulic assembly with separate water, which does not increase the dimensions of the apparatus compared to the use of conventional hydraulic assemblies with one single heat exchanger and without water separation.

In the novel hydraulic assembly, all the connections concerning both available heat exchangers are built-in in two quick-coupling manifold assemblies, which are designed to join, on a reference side, the heat exchangers and, on the opposite side, all the hydraulic functional apparatuses, such as the three-way valve and the circulation pump.

As explained more in detail below, the two manifold assemblies are both designed as hydraulic functional interface support bars.

For the purpose of the description, hereinafter the term *"hydraulic functional bar"* indicates a bar having a main body with a plurality of hydraulic fittings; and, therefore, said bar has not only a "hydraulic function", unlike a simple support bar, but also a "functional" function, which means that said hydraulic fittings are used to hydraulically connect the different components belonging to the hydraulic assembly.

In other words, in the present invention, each support hydraulic functional bar is three-dimensional and, in addition, also supports the hydraulic fittings needed to hydraulically join the heat exchangers to the hydraulic functional devices, such as, for example, the three-way valve, a manifold assembly, etc.. Furthermore, the hydraulic bar, thanks to its three-dimensional structure, integrates further hydraulic connections used, for example, to hydraulically connect temperature sensors, filling and draining taps, manifolds and distribution pipes, etc.

Therefore, the object of the present invention is to provide a hydraulic assembly as compact as possible and that solves the problems caused by similar apparatuses already available in the Prior Art.

The invention will now be described with reference to the accompanying drawings, which show a non-limiting embodiment thereof, wherein:
- Figure 1 shows a general hydraulic diagram of a hot water producing system comprising a hydraulic assembly according to the teaches of the invention;
- Figure 2 shows an application of a first embodiment of the hydraulic assembly shown in Figure 1, which is located inside an apartment thermal module;
- Figure 3A and Figure 3B show two overall views (from two different point of views) of the hydraulic assembly shown in Figure 2;
- Figure 4 shows two longitudinal section views (SEZ. A-A and SEZ. B-B) of the hydraulic assembly shown in Figure 1 (and of the first embodiment shown in Figures 2, 3A, 3B), where you can see, on a first reference side, the connections to the heat exchangers and, on a second side, which is opposite the first reference side, the connections to some hydraulic functional apparatuses;
- Figure 5 schematically show an exploded view of a second embodiment of the hydraulic assembly shown in Figure 1;
- Figure 6A and Figure 6B show two enlarged overall views (form different point of views) of a generic hydraulic functional support bar of the hydraulic assembly shown in Figure 5;
- Figure 7A shows a first front view of a generic hydraulic functional support bar manufactured according to the teaches of the invention and shown in Figures 6A and 6B;
- Figure 7B shows a second rear view of the generic hydraulic functional support bar of Figure 7A;
- Figure 7C shows a third side view of the generic hydraulic functional support bar of Figure 7A;
- Figure 7D shows a fourth plan view of the generic hydraulic functional support bar of Figure 7A;
- Figure 7E shows a first longitudinal section SEZ-A-A of the generic hydraulic functional support bar carried out on the front view of Figure 7A;
- Figure 7F shows a second longitudinal section SEZ-B-B of the generic hydraulic functional support bar carried out on the side view of Figure 7C; and
- Figure 7G shows a third cross section SEZ-C-C of the generic hydraulic functional support bar carried out on the front view of Figure 7A.

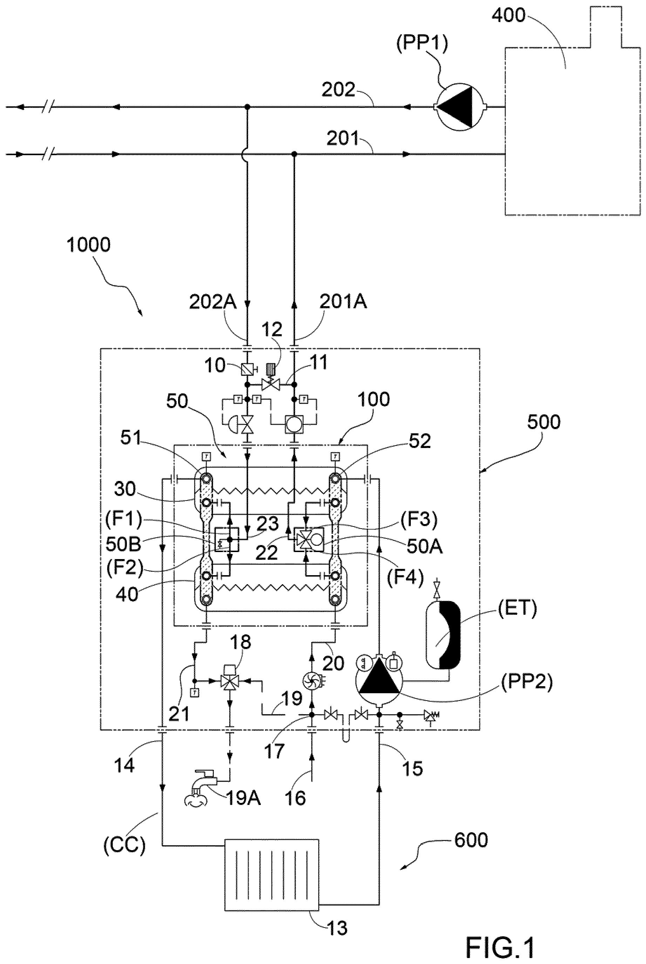

In figure 1, number 1000 indicates, as a whole, a hot water producing system comprising a hydraulic assembly 100 according to the present invention.

More in detail, the system 1000 comprises a thermal station 400 (provided with a circulation pump (PP1)), which is hydraulically connected to at least one thermal module 500, to which the aforesaid hydraulic assembly 100 belongs.

The thermal station 400 can be, for example, a district heating station of the type mentioned above.

The electric module 500 is connected to a plurality of hydraulic utilities 600, which will be described more in detail below.

In order to better understand the invention, the thermal station 400 can be considered as a sort of "black box", which receives cold water through a first conduit 201 and delivers hot water through a second conduit 202.

The hot water flowing through the second conduit 202 is used to supply the thermal module 500, from which, in the form of cold water, it returns to the thermal station 400 through the first conduit 201.

Furthermore, each conduit 201, 202 continues inside the thermal module 500 with a respective duct 201A, 202A; following now the path of the hot water along the duct 202A, there is filter 10, which is followed by a by-pass branch 11, which is controlled by a manual balancing valve 12.

The duct 202A continues up to a three-way manifold assembly 50B (provided with a draining valve), going through a hot water supply duct 23. After having entered the three-way manifold assembly 50B, the entire hot water flow is divided into a first flow (F1), which supplies hot water to the first heat exchanger 30 (preferably a plate heat exchanger), and into a second flow (F2), which supplies hot water to a second heat exchanger 40 (preferably a plate heat exchanger).

In the first heat exchanger 30, a hot water/cold water heat exchange takes place in order to heat the cold water belonging to a supply closed circuit (CC) supplying at least one radiator 13 (belonging to the hydraulic utilities 600) .

More in particular, the closed circuit (CC) comprises, in turn, a hot branch 14 (which starts in the first heat exchanger 30 and ends in the radiator 13) and a cold branch 15 (which starts in the radiator 13 and ends in the first heat exchanger 30). The cold branch 15 is provided with a circulation pump (PP2) (equipped with the usual expansion tank (ET)) for the water to be used for the heating of the rooms.

In other words, the cold water returning to the first heat exchanger 30 through the cold branch 15 is heated in the first heat exchanger 30 and returns in circulation to the radiator 13.

The domestic cold water coming from the water supply network 16 flows towards the second heat exchanger 40 in order to be heated.

Actually, in the area of a node 17, the in-flowing cold water is divided into a first portion, which is deflected towards a mixer 18 (through a duct 19) supplying a tap 19A, and into a second portion, which keeps flowing towards the second heat exchanger 40 (through a duct 20) in order to be heated.

The hot water flowing out of the second heat exchanger 40 flows towards the mixer 18 by means of a second duct 21.

With known systems, the hot water coming from the second heat exchanger 40 is adjusted by the user with the network cold water using the mixer 18, so as to obtain domestic water having the desired features of temperature and flow rate.

As shown in figure 1, again, the hot water flow (F2), after having cooled down in the passage through the second heat exchanger 40, flows (fourth flow (F4)) towards a three-way priority valve 50A of the sanitary circuit, which is also reached by the return (third flow (F3)) of the cold water from the first heat exchanger 30.

The three-way priority valve 50A turns into a return duct 22 for the cold water flowing towards the thermal station 440, from which the cycle starts again.

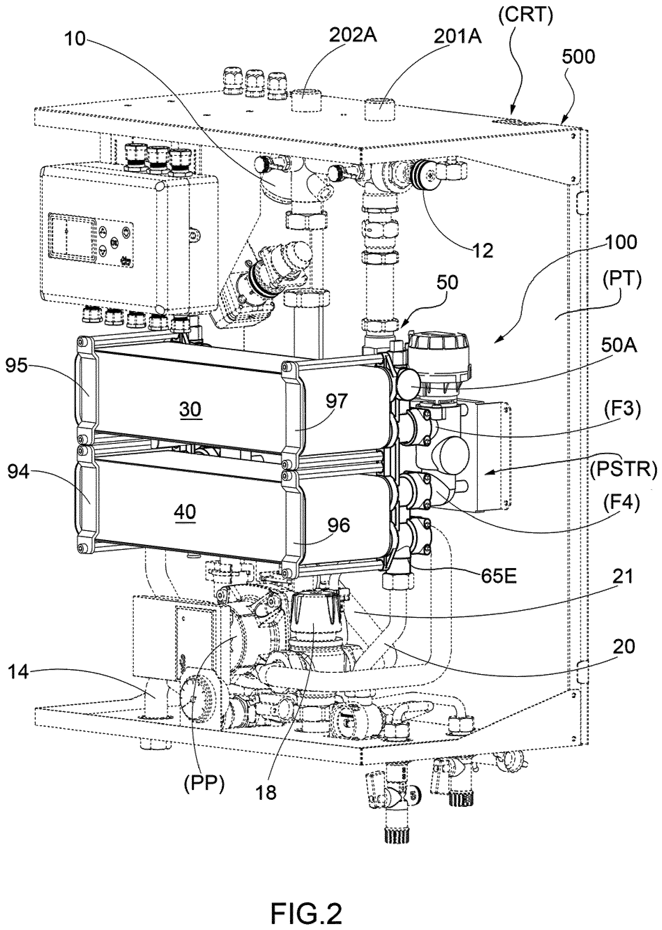

As shown in figure 2, the hydraulic assembly 100 is contained in a metal casing (CRT), which is provided with a bottom wall (PT).

The hydraulic assembly 100 is fixed to a support plate (PSTR), which, in turn, is fixed to the bottom wall (PT).

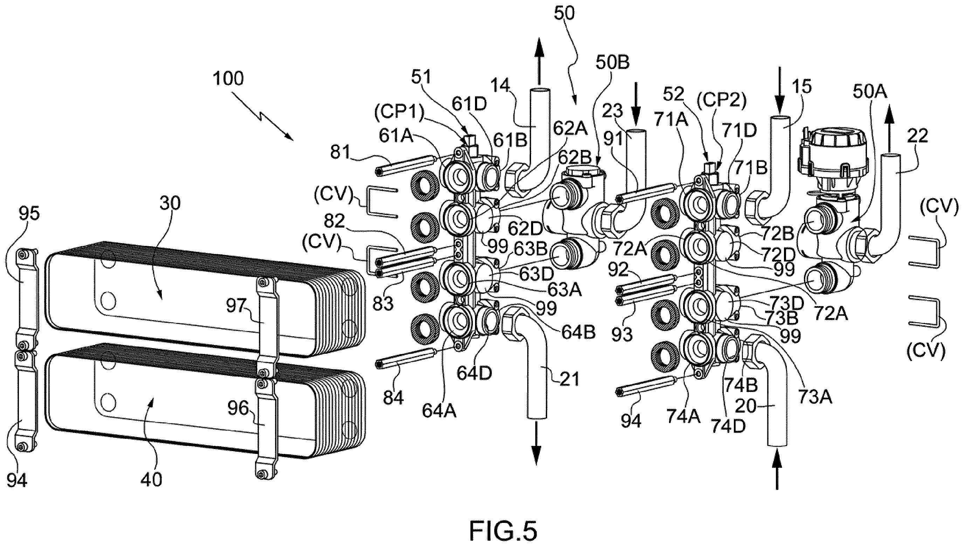

The first embodiment shown in Figures 1, 2, 3A, 3B, 4 and the second embodiment shown in Figures 5, 6A, 6B, 7A-7G are basically different from one another because of the shape of the two hydraulic functional support bars (see below).

If we simultaneously take into account both embodiments, the hydraulic assembly 100 comprises, in general, the following elements:
- the two heat exchangers 30, 40 (preferably plate heat exchangers);
- the three-way valve 50A;
- the three-way manifold assembly 50B; and
- an interface manifold 50, which offers an interface, on one side, with the heat exchangers 30, 40 and, on the other side, with the three-way valve 50A and with the three-way manifold assembly 50B.

As shown, in particular, in Figure 5 (which, as already mentioned above, relates to the second embodiment of the invention), the interface manifold 50 of the hydraulic assembly 100 comprises two hydraulic functional support bars 51, 52 between the heat exchangers 30, 40 and the two hydraulic functional devices 50A, 50B.

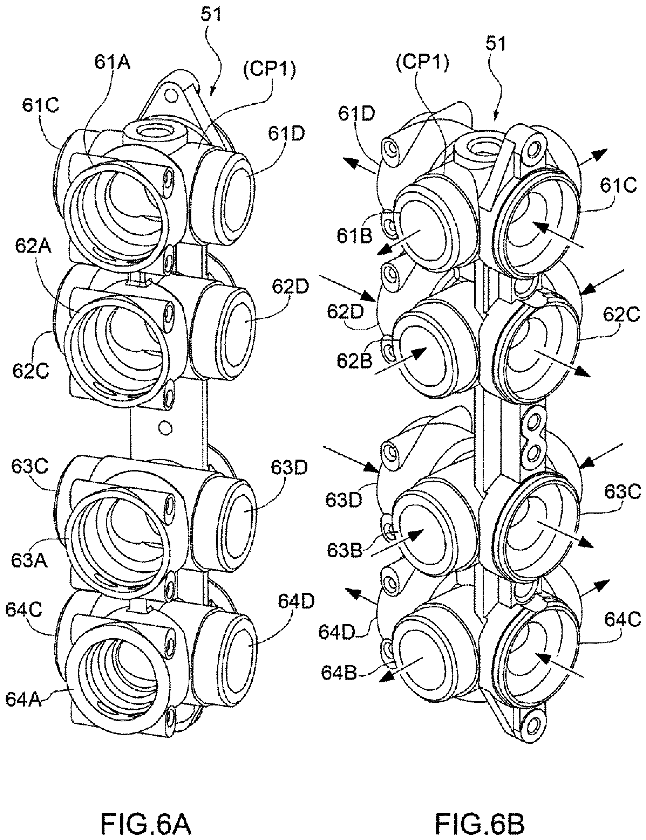

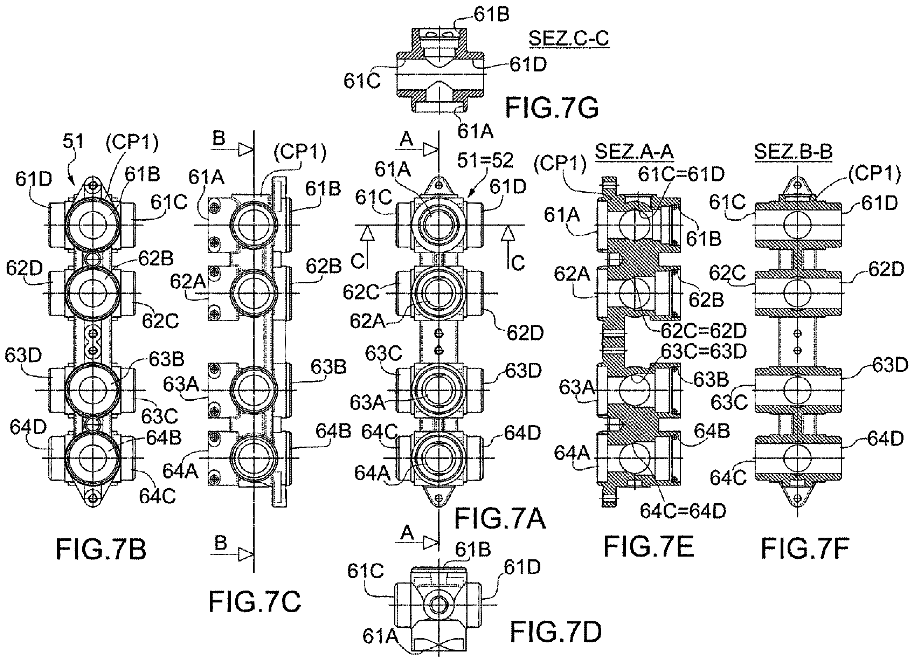

In order to make the drawings as simple as possible, figures 6A, 6B, 7A-7G only show the reference numbers concerning the generic hydraulic functional support bar 51, as the hydraulic functional support bar 52 is identical to the generic hydraulic functional support bar 51.

In particular (with reference to Figures 6A, 6B), the hydraulic functional support bar 51 comprises joining elements on all four sides.

More in detail, the hydraulic functional support bar 51 comprises:
- a first plurality of front joining elements 61A, 62A, 63A, 64A (Figure 7A);
- a second plurality of rear joining elements 61B, 62B, 63B, 64B (Figure 7B);
- a third plurality of left side joining elements 61C, 62C, 63C, 64C (Figure 7A);
- a fourth plurality of right side joining elements 61D, 62D, 63D, 64D (Figure 7A).

Similarly, the hydraulic functional support bar 52 comprises:
- a first plurality of front joining elements 71A, 72A, 73A, 74A ;
- a second plurality of rear joining elements 71B, 72B, 73B, 74B;
- a third plurality of left side joining elements 71C, 72C, 73C, 74C;
- a fourth plurality of right side joining elements 71D, 72D, 73D, 74D.

The reference numbers of the joining elements 71A, 72A, 73A, 74A; 71B, 72B, 73B, 74B; 71C, 72C, 73C, 74C; 71D, 72D, 73D, 74D (if necessary, provided with respective sealing rings) of the hydraulic functional support bars 52 are not shown in the accompanying figures, so as not to make the figures too complicated and because these elements are identical to the aforesaid joining elements 61A, 62A, 63A, 64A; 61B, 62B, 63B, 64B; 61C, 62C, 63C, 64C; 61D, 62D, 63D, 64D (if necessary, provided with respective sealing rings) concerning the hydraulic functional support bar 51 shown in figures 6A, 6B, 7A-7G.

Each joining element comprises at least one quick-coupling compression connection.

In particular, the quick-coupling compression connection is a telescopic connection.

Each quick-coupling connection is provided with a respective hydraulic seal gasket, as shown in Figure 5.

Some joining elements can be closed by means of a plug 99.

In the embodiment of Figure 5, as far as the hydraulic functional support bar 51 is concerned, it has a main body (CP1) and, furthermore:
- two front joining elements 61A, 62A are hydraulically connected to the heat exchanger 30; whereas two further front joining elements 63A, 64A are hydraulically connected to the heat exchanger 40;
- two rear joining elements 62B and 63B are hydraulically connected to the three-way manifold assembly 50B; whereas each one of the two remaining rear joining elements 61B and 64B is closed by a respective plug 99 (not shown in Figure 5);
- the left side joining elements 61C, 62C, 63C, 64C are all closed by plugs 99 (not shown in Figure 5);
- the right side joining element 61D is hydraulically connected to the hot branch 14; the right side joining element 64D is hydraulically connected to the aforesaid duct 21; whereas each one of the two remaining right side joining elements 62D and 63D is closed by a respective plug 99.

On the other hand, as far as the hydraulic functional support bar 52 is concerned, it has a main body (CP2) and, furthermore:
- two front joining elements 71A, 72A are hydraulically connected to the heat exchanger 30; whereas two further front joining elements 73A, 74A are hydraulically connected to the heat exchanger 40;
- two rear joining elements 72B and 73B are hydraulically connected to the three-way valve 50A; whereas each one of the two remaining rear joining elements 71B and 74B is closed by a respective plug 99 (not shown in Figure 5);
- the left side joining elements 71C, 72C, 73C, 74C are all closed by plugs 99 (not shown in Figure 5);
- the right side joining element 71D is hydraulically connected to the cold branch 15; the right side joining element 74D is hydraulically connected to the aforesaid duct 20; whereas each one of the two remaining right side joining elements 72D and 73D is closed by a respective plug 99.

Therefore, in both hydraulic functional support bars 51, 52 used in the second embodiment shown in Figure 5, the joining elements available on at least three of the four faces are used to obtain, in an easy and quick manner, the hydraulic connections needed for the operation of the system as a whole.

Furthermore, similar considerations can also be applied to the hydraulic functional support bars used in the first embodiment.

Actually, the hydraulic functional support bars of the two embodiments basically differ in that the ones used in the first embodiment (Figures 2, 3A, 3B, 4) have a smaller number of joining elements.

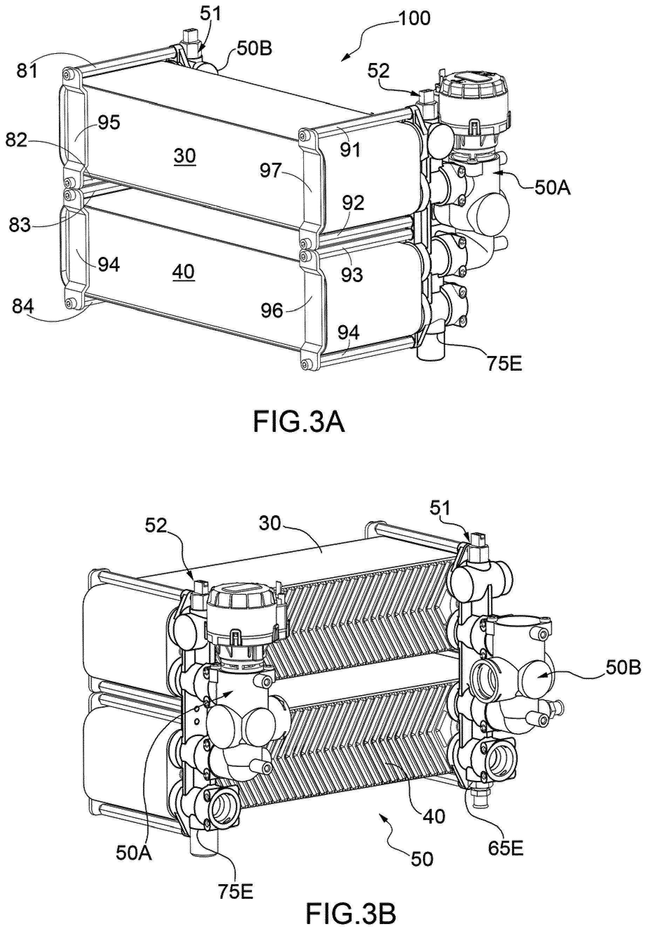

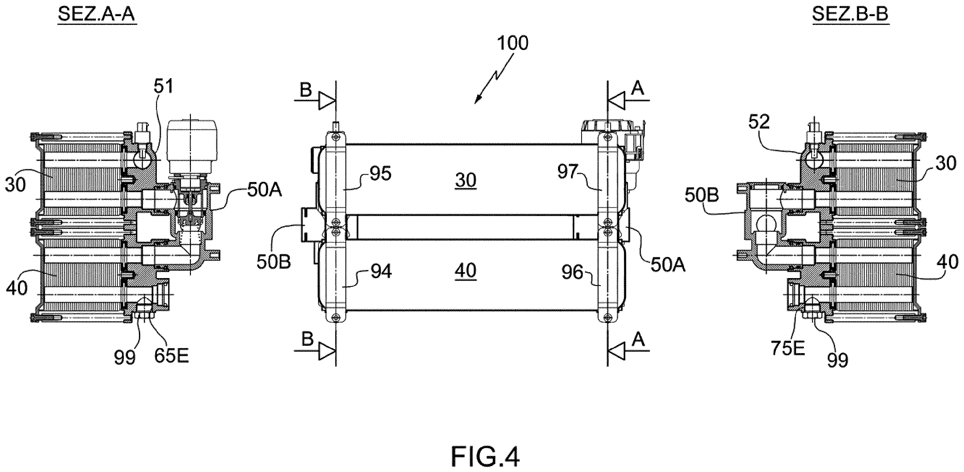

Furthermore, in the first embodiment, each bar 51, 52 is also provided with a respective joining element 65E and 75E, respectively, which is located at the bottom of the bar 51, 52 (Figures 3A, 3B, 4).

In Figure 4, each joining element 65E, 75E is closed by a respective plug 99, whereas, in the configuration shown in Figure 1, you can see how the joining element 65E is used to connect the duct 20 to the hydraulic assembly 100.

In order to make the description easier, we assumed that the two hydraulic functional support bars are identical.

However, without going beyond the scope of protection of the invention, the hydraulic functional support bars can also be different in shape, size, number and shape of the joining elements, etc.

Furthermore, it is obvious for a person skilled in the art that the joining elements available on a same bar or in two different bars can be identical or different, as well as the plugs can all be identical or different from one another, depending on the shape and the mechanical and geometrical features of the joining elements to be closed.

In the hydraulic assembly 100, the heat exchanger 30, 40, the hydraulic functional devices 50A, 50B and the interface manifold 50 are packed together by means of tie rod devices 81, 82, 83, 84; 91, 92, 93, 94, which, in a known manner, are associated with brackets 94, 95, 96, 97 pressing on the two heat exchangers 30, 40.

Furthermore, as shown in Figure 5, the hydraulic assembly 100 is characterized in that the joining elements 61A, 62A, 63A, 64A; 71A, 72A, 73A, 74A) are designed to join, on a first reference side, the heat exchangers 30, 40; whereas, on a second side that is opposite the first reference side, the joining elements 61B, 62B, 63B, 64B; 71B, 72B, 73B, 74B are designed to join, respectively, all the hydraulic functional apparatuses 50A, 50B.

In order to fix a least some rear joining elements 62B, 63B, 64B; 72B, 73B, 74B to the hydraulic functional devices 50A, 50B, you can use the U-bolts (CV) shown in Figure 5.

In a known matter, the functional hydraulic apparatuses 50A, 50B comprise a three-way priority valve 50A and a three-way manifold assembly 50B (provided with a draining valve).

At least part of the front joining elements 61A, 62A, 63A, 64A; 71A, 72A, 73A, 74A are arranged on a same plane.

Furthermore, at least part of the rear joining elements 62B, 63B, 64B; 72B, 73B, 74B are arranged on a same plane.

In addition, further connections for control apparatuses, such as temperature sensors, filling and draining taps, manifolds and distribution pipes, are built-in in at least one functional hydraulic support bar 51, 52.

The same teaches also apply in case, instead of the remote thermal station 400, as shown in Figure 1, there is a traditional boiler (though this solution is not shown). In this case, the boiler integrates the hydraulic assembly 100 and a first circulation pump (not shown).

The advantages of the hydraulic assembly according to the invention can be summarized as follows:
- the quick fixing of the heat exchangers and of the hydraulic apparatuses on the hydraulic functional support bars simplifies the assembly and maintenance operations with evident economic advantages;
- further connections for control apparatuses, such as temperature sensors, filling and draining taps, manifolds and distribution pipes, can be built-in in the two functional hydraulic support bars;
- the high integration of the hydraulic functional support bars allows manufacturers to eliminate the connection pipes of the different components, thus evidently simplifying assembly/maintenance operations and significantly reducing dimensions.

## Claims

1. A hydraulic assembly (100) comprising:
- at least one first heat exchanger (30) where a hot water/cold water heat exchange takes place in order to heat the cold water belonging to a supply closed circuit (CC) supplying at least one radiator (13)
- at least one second heat exchanger (40) for heating the domestic cold water;
- at least two hydraulic functional devices (50A, 50B); and
- at least one interface manifold (50), which offers an interface, on one side, with said at least one first heat exchanger (30) and with said at least one second heat exchanger (40) and, on the other side, with said at least two hydraulic functional devices (50A, 50B);
wherein said at least one interface manifold (50) comprises at least two hydraulic functional support bars (51; 52) having a main body (CP1, CP2) supporting a plurality of closable joining elements (61A, 62A, 63A, 64A; 61B, 62B, 63B, 64B; 61C, 62C, 63C, 64C; 61D, 62D, 63D, 64D; 71A, 72A, 73A, 74A; 71B, 72B, 73B, 74B; 71C, 72C, 73C, 74C; 71D, 72D, 73D, 74D), which join said at least one first heat exchanger (30) and said at least one second heat exchanger (40) with said at least two hydraulic functional devices (50A, 50B);
said hydraulic assembly (100) being **characterized in that**
- said at least one first heat exchanger (30);
- said at least one second heat exchanger (40);
- said at least two hydraulic functional devices (50A, 50B); and
- said at least one interface manifold (50) are packed together by means of tie rod devices (81, 82, 83, 84; 91, 92, 93, 94) and brackets (95, 96, 97, 98).

2. Hydraulic assembly (100), according to Claim 1, **characterized in that** each hydraulic functional support bar (51; 52) comprises four faces, parallel to one another two by two, each face comprising at least one closable joining element (61A, 62A, 63A, 64A; 61B, 62B, 63B, 64B; 61C, 62C, 63C, 64C; 61D, 62D, 63D, 64D; 71A, 72A, 73A, 74A; 71B, 72B, 73B, 74B; 71C, 72C, 73C, 74C; 71D, 72D, 73D, 74D).

3. Hydraulic assembly (100), according to anyone of the preceding Claims, **characterized in that** each joining element (61A, 62A, 63A, 64A; 61B, 62B, 63B, 64B; 61C, 62C, 63C, 64C; 61D, 62D, 63D, 64D; 71A, 72A, 73A, 74A; 71B, 72B, 73B, 74B; 71C, 72C, 73C, 74C; 71D, 72D, 73D, 74D) comprises a quick-coupling compression connection.

4. Hydraulic assembly (100), according to Claim 3, **characterized in that** said quick-coupling compression connection is a telescopic connection.

5. Hydraulic assembly (100), according to anyone of the preceding Claims, **characterized in that** said joining elements (61A, 62A, 63A, 64A; 61B, 62B, 63B, 64B; 61C, 62C, 63C, 64C; 61D, 62D, 63D, 64D; 71A, 72A, 73A, 74A; 71B, 72B, 73B, 74B; 71C, 72C, 73C, 74C; 71D, 72D, 73D, 74D) are designed to join, on a reference side, the heat exchangers (30, 40) and, on the opposite side, the hydraulic functional devices (50A, 50B).

6. Hydraulic assembly (100), according to Claim 5, **characterized in that** said joining elements (61A, 62A, 63A, 64A; 61B, 62B, 63B, 64B; 61C, 62C, 63C, 64C; 61D, 62D, 63D, 64D; 71A, 72A, 73A, 74A; 71B, 72B, 73B, 74B; 71C, 72C, 73C, 74C; 71D, 72D, 73D, 74D) are designed to also receive other devices, such as temperature sensors, filling and draining taps, manifolds and distribution pipes, and ducts belonging to the hydraulic circuit.

7. Hydraulic assembly (100), according to anyone of the preceding Claims, **characterized in that** said hydraulic functional devices (50A, 50B) comprise a three-way priority valve (50A) and a three-way manifold (50B).

8. Hydraulic assembly (100), according to anyone of the preceding Claims, **characterized in that**, in order to fix at least some joining elements (61A, 62A, 63A, 64A; 61B, 62B, 63B, 64B; 61C, 62C, 63C, 64C; 61D, 62D, 63D, 64D; 71A, 72A, 73A, 74A; 71B, 72B, 73B, 74B; 71C, 72C, 73C, 74C; 71D, 72D, 73D, 74D), a plurality of U-bolts (CV) are used.

## Patentansprüche

1. Hydraulikbaugruppe (100), umfassend:
- mindestens einen ersten Wärmetauscher (30), in dem ein Warmwasser/Kaltwasser-Wärmetausch stattfindet, um das zu einem geschlossenen Versorgungskreislauf (CC) gehörende Kaltwasser zu erwärmen, der mindestens einen Kühler (13) versorgt
- mindestens einen zweiten Wärmetauscher (40) zum Erwärmen des Kaltwassers;
- mindestens zwei hydraulische Funktionsvorrichtungen (50A, 50B); und
- mindestens einen Schnittstellenverteiler (50), der auf einer Seite eine Schnittstelle zu dem mindestens einen ersten Wärmetauscher (30) und zu dem mindestens einen zweiten Wärmetauscher (40) und auf der anderen Seite zu den mindestens zwei hydraulischen Funktionsvorrichtungen (50A, 50B) bietet;
wobei der mindestens eine Schnittstellenverteiler (50) mindestens zwei hydraulische Funktionsstützstangen (51; 52) mit einem Hauptkörper (CP1, CP2) aufweist, der mehrere verschließbare Verbindungselemente (61A, 62A, 63A, 64A; 61B, 62B trägt , 63B, 64B, 61C, 62C, 63C, 64C, 61D, 62D, 63D, 64D, 71A, 72A, 73A, 74A, 71B, 72B, 73B, 74B, 71C, 72C, 73C, 74C, 71D, 72D, 73D, 74D) stützt, die den mindestens einen ersten Wärmetauscher (30) und den mindestens einen zweiten Wärmetauscher (40) mit den mindestens zwei hydraulischen Funktionsvorrichtungen (50A, 50B) verbinden;
wobei die Hydraulikanordnung (100) **dadurch gekennzeichnet ist, dass**
- der mindestens eine erste Wärmetauscher (30);
- der mindestens eine zweite Wärmetauscher (40);
- die mindestens zwei hydraulischen Funktionsvorrichtungen (50A, 50B); und
- der mindestens eine Schnittstellenverteiler (50) mittels Spurstangenvorrichtungen (81, 82, 83, 84; 91, 92, 93, 94) und Halterungen (95, 96, 97, 98) zusammengepackt sind.

2. Hydraulikbaugruppe (100) nach Anspruch 1, **dadurch gekennzeichnet, dass** jede hydraulische Funktionsstützstange (51; 52) vier Flächen umfasst, von denen jeweils zwei zueinander parallel sind, wobei jede Fläche mindestens ein verschließbares Verbindungselement (61A, 62A, 63A, 64A; 61B, 62B, 63B, 64B; 61C, 62C, 63C, 64C; 61D, 62D, 63D, 64D; 71A, 72A, 73A, 74A; 71B, 72B, 73B, 74B; 71C, 72C, 73C, 74C; 71D, 72D, 73D, 74D) umfasst.

3. Hydraulikbaugruppe (100) nach einem der vorhergehenden Ansprüche, **dadurch gekennzeichnet, dass** jedes Verbindungselement (61A, 62A, 63A, 64A; 61B, 62B, 63B, 64B; 61C, 62C, 63C, 64C; 61D, 62D, 63D, 64D; 71A, 72A, 73A, 74A; 71B, 72B, 73B, 74B; 71C, 72C, 73C, 74C; 71D, 72D, 73D, 74D) eine Schnellkupplungs-Druckverbindung umfasst.

4. Hydraulikbaugruppe (100) nach Anspruch 3, **dadurch gekennzeichnet, dass** die Schnellkupplungs-Druckverbindung eine Teleskopverbindung ist.

5. Hydraulikbaugruppe (100) nach einem der vorhergehenden Ansprüche, **dadurch gekennzeichnet, dass** die Verbindungselemente (61A, 62A, 63A, 64A; 61B, 62B, 63B, 64B; 61C, 62C, 63C, 64C; 61D, 62D, 63D , 64D; 71A, 72A, 73A, 74A; 71B, 72B, 73B, 74B; 71C, 72C, 73C, 74C; 71D, 72D, 73D, 74D) ausgelegt sind, auf einer Referenzseite die Wärmetauscher (30, 40) zu verbinden und auf der gegenüberliegenden Seite die hydraulischen Funktionsvorrichtungen (50A, 50B) zu verbinden.

6. Hydraulikbaugruppe (100) nach Anspruch 5,
**dadurch gekennzeichnet, dass** die Verbindungselemente (61A, 62A, 63A, 64A; 61B, 62B, 63B, 64B; 61C, 62C, 63C, 64C; 61D, 62D, 63D, 64D; 71A, 72A, 73A, 74A; 71B, 72B) , 73B, 74B; 71C, 72C, 73C, 74C; 71D, 72D, 73D, 74D) ausgelegt sind, auch andere Vorrichtungen wie Temperatursensoren, Füll- und Entleerungshähne, Verteiler und Verteilerrohre und Leitungen aufzunehmen, die zum Hydraulikkreislauf gehören.

7. Hydraulikbaugruppe (100) nach einem der vorhergehenden Ansprüche, **dadurch gekennzeichnet, dass** die hydraulischen Funktionsvorrichtungen (50A, 50B) ein Dreiwege-Prioritätsventil (50A) und einen Dreiwege-Verteiler (50B) umfassen.

8. Hydraulikbaugruppe (100) nach einem der vorhergehenden Ansprüche, **dadurch gekennzeichnet, dass** zur Befestigung mindestens einiger Verbindungselemente (61A, 62A, 63A, 64A; 61B, 62B, 63B, 64B; 61C, 62C, 63C) 64C, 61D, 62D, 63D, 64D, 71A, 72A, 73A, 74A, 71B, 72B, 73B, 74B, 71C, 72C, 73C, 74C, 71D, 72D, 73D, 74D), mehrere U-Bolzen (CV) verwendet werden.

## Revendications

1. Unité hydraulique (100) comprenant :
au moins un premier échangeur de chaleur (30) dans lequel a lieu un échange de chaleur eau chaude/eau froide afin de chauffer l'eau froide appartenant à un circuit fermé (CC) d'alimentation alimentant au moins un radiateur (13)
au moins un second échangeur de chaleur (40) pour le chauffage de l'eau froide sanitaire ;
au moins deux dispositifs fonctionnels hydrauliques (50A, 50B) ; et
au moins un collecteur d'interface (50), qui offre une interface, d'un côté, avec ledit au moins un premier échangeur de chaleur (30) et avec ledit au moins un second échangeur de chaleur (40) et, de l'autre côté, avec ledit au moins deux dispositifs fonctionnels hydrauliques (50A, 50B) ;
ledit au moins un collecteur d'interface (50) comprenant au moins deux barres de support fonctionnelles hydrauliques (51 ; 52) ayant un corps principal (CP1, CP2) supportant une pluralité d'éléments de liaison pouvant être fermés (61A, 62A, 63A, 64A ; 61B, 62B, 63B, 64B ; 61C, 62C, 63C, 64C ; 61D, 62D, 63D, 64D ; 71A, 72A, 73A, 74A ; 71B, 72B, 73B, 74B ; 71C, 72C, 73C, 74C ; 71D, 72D, 73D, 74D), qui relient ledit au moins un premier échangeur de chaleur (30) et ledit au moins un second échangeur de chaleur (40) auxdits au moins deux dispositifs fonctionnels hydrauliques (50A, 50B) ;
ladite unité hydraulique (100) étant **caractérisée en ce que**
ledit au moins un premier échangeur de chaleur (30) ;
ledit au moins un second échangeur de chaleur (40) ;
lesdits au moins deux dispositifs fonctionnels hydrauliques (50A, 50B) ; et
ledit au moins un collecteur d'interface (50) sont regroupés au moyen de tirants (81, 82, 83, 84 ; 91, 92, 93, 94) et de supports (95, 96, 97, 98).

2. Unité hydraulique (100), selon la revendication 1, **caractérisée en ce que** chaque barre de support fonctionnelle hydraulique (51 ; 52) comprend quatre faces, parallèles entre elles deux à deux, chaque face comprenant au moins un élément de liaison pouvant être fermé (61A, 62A, 63A, 64A ; 61B, 62B, 63B, 64B ; 61C, 62C, 63C, 64C ; 61D, 62D, 63D, 64D ; 71A, 72A, 73A, 74A ; 71B, 72B, 73B, 74B ; 71C, 72C, 73C, 74C ; 71D, 72D, 73D, 74D) .

3. Unité hydraulique (100), selon l'une quelconque des revendications précédentes, **caractérisée en ce que** chaque élément de liaison (61A, 62A, 63A, 64A ; 61B, 62B, 63B, 64B ; 61C, 62C, 63C, 64C ; 61D, 62D, 63D, 64D ; 71A, 72A, 73A, 74A ; 71B, 72B, 73B, 74B ; 71C, 72C, 73C, 74C ; 71D, 72D, 73D, 74D) comprend une liaison de compression rapide.

4. Unité hydraulique (100), selon la revendication 3, **caractérisée en ce que** ladite liaison de compression rapide est une liaison télescopique.

5. Unité hydraulique (100), selon l'une quelconque des revendications précédentes, **caractérisée en ce que** lesdits éléments de liaison (61A, 62A, 63A, 64A ; 61B, 62B, 63B, 64B ; 61C, 62C, 63C, 64C ; 61D, 62D, 63D, 64D ; 71A, 72A, 73A, 74A ; 71B, 72B, 73B, 74B ; 71C, 72C, 73C, 74C ; 71D, 72D, 73D, 74D) sont conçus pour relier, sur un côté de référence, les échangeurs de chaleur (30, 40) et, sur le côté opposé, les dispositifs fonctionnels hydrauliques (50A, 50B).

6. Unité hydraulique (100), selon la revendication 5, **caractérisée en ce que** lesdits éléments de liaison (61A, 62A, 63A, 64A ; 61B, 62B, 63B, 64B ; 61C, 62C, 63C, 64C ; 61D, 62D, 63D, 64D ; 71A, 72A, 73A, 74A ; 71B, 72B, 73B, 74B ; 71C, 72C, 73C, 74C ; 71D, 72D, 73D, 74D) sont conçus pour recevoir également d'autres dispositifs, tels que des capteurs de température, des robinets de remplissage et de vidange, des collecteurs et des conduites de distribution, et des conduits appartenant au circuit hydraulique.

7. Unité hydraulique (100), selon l'une quelconque des revendications précédentes, **caractérisée en ce que** lesdits dispositifs fonctionnels hydrauliques (50A, 50B) comprennent une vanne prioritaire à trois voies (50A) et un collecteur à trois voies (50B).

8. Unité hydraulique (100), selon l'une quelconque des revendications précédentes, **caractérisée en ce que**, pour fixer au moins certains éléments de liaison (61A, 62A, 63A, 64A ; 61B, 62B, 63B, 64B ; 61C, 62C, 63C, 64C ; 61D, 62D, 63D, 64D ; 71A, 72A, 73A, 74A ; 71B, 72B, 73B, 74B ; 71C, 72C, 73C, 74C ; 71D, 72D, 73D, 74D), une pluralité de boulons en U (CV) sont utilisés.
